# EUROPÄISCHE PATENTSCHRIFT

(11) **EP 0 339 253 B1**
(45) Veröffentlichungstag und Bekanntmachung des Hinweises auf die Patenterteilung: **27.04.1994**
(21) Anmeldenummer: 89104964.5
(22) Anmeldetag: 18.03.1989
(51) Int. Cl.: B62D 53/10

(54) **Sattelkupplung**
Saddle coupling
Sellette d'attelage

(30) Priorität: 27.04.1988 CH 1572/88
(43) Veröffentlichungstag der Anmeldung: 02.11.1989
(73) Patentinhaber: GEORG FISCHER AKTIENGESELLSCHAFT, CH-8201 Schaffhausen (CH)
(72) Erfinder: Jakob, Lothar, D-7702 Gottmadingen (DE)

(56) Entgegenhaltungen:
- FR-A- 522 540
- FR-A- 2 325 550
- GB-A- 1 071 763

## Beschreibung

Die Erfindung betrifft eine Sattelkupplung nach dem Oberbegriff des Anspruchs 1.

Bei Sattelkupplungen ist es bekannt, einen Hebel mit einem Verriegelungsvorsprung vorzusehen, wobei letzterer mit der Kupplungsklaue zum Verriegeln derselben im eingekuppelten Zustand in Eingriff bringbar ist. Hierbei ist der Hebel als zweiarmiger Hebel mit entsprechend geringer Uebersetzung ausgebildet, wobei sowohl die Kupplungsklaue als auch der Hebel aufgrund der aufzunehmenden Kräfte als Schmiedestücke sowie mit entsprechend grossem Gewicht auszubilden sind und eine entsprechende Anlenkung über jeweils einen kräftigen Drehzapfen benötigen.

Ausserdem ist es bei Sattelkupplungen bekannt, anstelle eines Verriegelungshebels zur Gewichtsverminderung einen an der Kupplungsklaue angreifenden Riegel vorzusehen, der jedoch eine entsprechende Geradführung benötigt.

Die FR-A-2 325 500 zeigt eine Sattelkupplung entsprechend den Merkmalen des Oberbegriffs des vorliegenden unabhängigen Anspruchs 1 sowie die Merkmale, dass der Schenkel der Kupplungsklaue 3 aussenseitig im Endbereich eine Anlagefläche 8 aufweist, die mit einem korrespondierenden Verriegelungsvorsprung eines Hebels 9 in Eingriff bringbar ist. Der Hebel 9 benötigt eine entsprechend starke Anlenkung wie diejenige der Kupplungsklaue 3.

Aufgabe der Erfindung ist es, eine Sattelkupplung nach dem Oberbegriff des Anspruchs 1 zu schaffen, die einfach und leichter im Aufbau und in der Betätigung ist.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
- Fig. 1: zeigt in Draufsicht ausschnittweise eine Sattelkupplung im eingekuppelten Zustand.
- Fig. 2: zeigt die Sattelkupplung von Fig. 1 im ausgekuppelten Zustand.

Die dargestellte Sattelkupplung umfasst eine Sattelplatte 1 mit einem bodenseitig teilweise geschlossenen Kupplungsmaul 2, das in einer zur Sattelplatte 1 zentralen, halbkreisförmigen Ausnehmung 3 endet, die zur Aufnahme eines Zugsattelzapfens 4 eines Sattelaufliegers dient. Auf der Sattelplatte 1 ist eine etwa V-förmige Kupplungsklaue 5 um einen Drehzapfen 6 derart drehbar angelenkt, dass sie einen von der Ausnehmung 3 aufgenommenen Zugsattelzapfen 4 kupplungsmaulseitig umfassen kann. Eine Zugfeder 7 greift an der Kupplungsklaue 5 benachbart zu dem Drehzapfen 6 an dem Schenkel 5′, der sich bei geschlossener Kupplungsklaue 5 kupplungsmaulseitig befindet, an und liefert eine entsprechende Vorspannung in Oeffnungsrichtung der Kupplungsklaue 5.

Der Schenkel 5′ der Kupplungsklaue 5 besitzt eine kreisausschnittförmige Ausnehmung 8 zum teilweisen Umfassen des Zugsattelzapfens 4, wobei der Rand der Ausnehmung 8 zwischen einem Bund 9 und mit einem entsprechendem Abstand angeordneten Zapfenhals 9a des Zugsattelzapfens 4 greift.

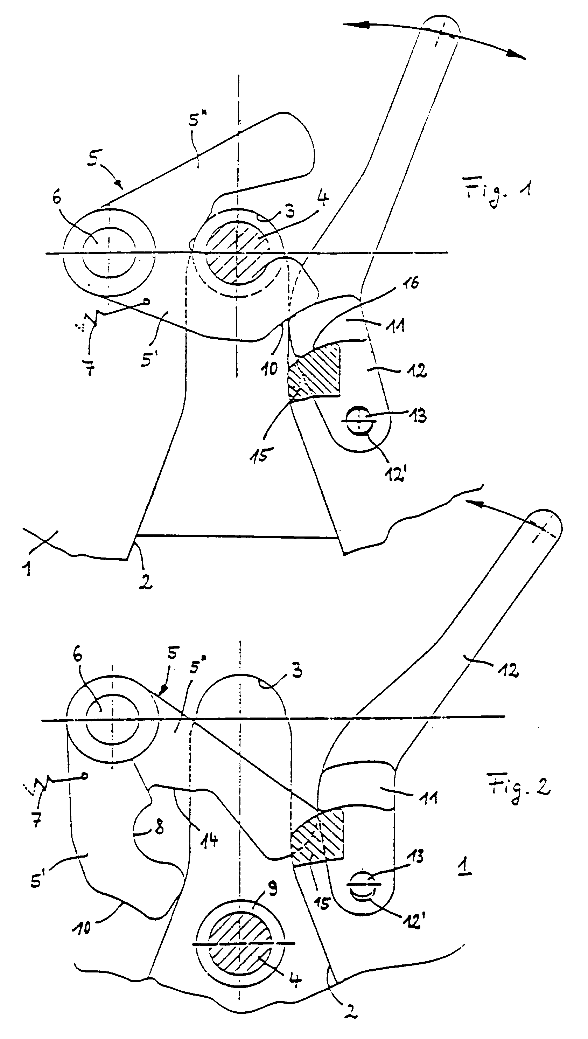

Der Schenkel 5′ weist aussenseitig im Endbereich eine ringausschnittförmige Anlagefläche 10 auf, die mit einem korrespondierenden Verriegelungsvorsprung 11 in Eingriff bringbar ist. Der Verriegelungsvorsprung 11 ist einstückig mit einem leicht gewinkelten einarmigen Hebel 12 ausgebildet, der über einen relativ schwachen Zapfen 13 auf der Sattelplatte 1 drehbar angelenkt ist. Und zwar ist diese Anlenkung des Hebels 12 benachbart zu dem sich erweiternden Bereich des Kupplungsmauls 2 am dortigen Ende des Hebels 12 vorgesehen. Der Verriegelungsvorsprung 11 befindet sich auf der der Sattelplatte 1 abgewandten Seite auf dem Hebel 12, so dass durch Schwenken des Hebels 12 um den Zapfen 13 in Richtung zur Kupplungsklaue 5 der Hebel 12 unter den Schenkel 5′ und der Verriegelungsvorsprung 11 in Eingriff mit der Anlagefläche 10 gelangt, wenn der Zugsattelzapfen 4 die Kupplungsklaue 5 durch sein Einführen in die Ausnehmung 3 in die in Fig. 1 dargestellte Position gebracht hat. Der Schenkel 5 stützt sich in verriegeltem Zustand über den Hebel 12 auf der Sattelplatte 1 ab, während sich das über den Drehzapfen 6 angelenkte Ende des Schenkels 5′ der Kupplungsklaue direkt auf der Sattelplatte 1 abstützt.

Der Schenkel 5˝ besitzt ein gerundetes freies Ende, das im offenen Zustand der Kupplungsklaue 5 (Fig. 2) an dem Hebel 12 anliegt. Beim Einführen des Zugsattelzapfens 4 nimmt dieser den Schenkel 5˝ gegen die Kraft der Zugfeder 7 mit, und zwar erfolgt die Mitnahme durch den unteren Bund 9 des Zugsattelzapfens 4, der, wenn er zu hoch eingestellt wäre, über den Schenkel 5'' hinwegfahren und nicht eingekuppelt würde. Dies liefert eine entsprechende Sicherheit beim Einkuppeln. Der untere Bund 9 des Zugsattelzapfens 4 gelangt beim Einkuppeln mit einer innenseitigen geraden Anlagefläche 14 des Schenkels 5'' benachbart zum Schenkel 5′ und damit schliesslich mit der Ausnehmung 3 in Eingriff. Hierdurch gelangt ferner der Schenkel 5′ fortschreitend zwischen die Bunde 9 des Zugsattelzapfens 4. In dieser Stellung erfolgt das Verriegeln der Kupplungsklaue 5 durch entsprechende Betätigung des Hebels 12 an seinem freien Ende, über den auch das Entriegeln der Sattelkupplung erfolgt.

Der Hebel 12 bestitzt aufgrund seiner einseitigen Anlenkung benachbart zum sich erweiternden Teil des Kupplungsmauls 2 einen relativ langen Hebelarm und damit eine entsprechend grosse Uebersetzung.

Der Hebel 12 ist fliegend am Zapfen 13 angelenkt (ovales Lagerauge 12′ für den Zapfen 13 mit der Hauptachse in Richtung zum Verriegelungsvorsprung 11). Ausserdem ist auf der Sattelplatte 1 ein Gegenanschlag 15 mit einer um die Achse des Zapfens 13 konzentrischen Führungsfläche 16 derart befestigt, dass der Hebel 12 unter den Gegenanschlag 15 schwenken und die der Anlagefläche 10 abgekehrte Seite des Verriegelungsvorsprungs 11, die eine um die Achse des Lagerauges 12′ konzentrische Fläche bildet, mit der Führungsfläche 16 in Eingriff gelangt. Der Verriegelungsvorsprung 11 ist im wesentlichen ringsegmentartig, verbreitert sich aber etwa konisch zu der dem Kupplungsmaul 2 abgekehrten Seite hin, so dass aufgrund dessen und zusätzlich aufgrund der fliegenden Lagerung des Hebels 12 eine Verschleisskompensation vorgesehen ist. Entsprechend dem Verschleiss taucht der Verriegelungsvorsprung 11 in dem Raum zwischen Anlagefläche 10 und Führungsfläche 16 ein und führt damit zu einer automatischen Nachstellung.

Der Hebel 12 mit dem Verriegelungsvorsprung 11 können, da hierauf keine Querkräfte ausgeübt werden, aus Guss (Sphäroguss) ebenso wie die Sattelplatte 1 bestehen, nur die Kupplungsklaue 5 ist ein Schmiedeteil. Das Gewicht dieser Teile kann entsprechend vermindert werden. Infolge des einarmigen Hebels 12 wird nur eine relativ geringe Kraft zum Ver- bzw. Entriegeln benötigt.

## Patentansprüche

1. Sattelkupplung mit einer Sattelplatte (1), die ein in einer zentralen Ausnehmung (3) endendes Kupplungsmaul (2) für einen Zugsattelzapfen (4) eines Aufliegers aufweist und an der Sattelplatte (1) angelenkte Verriegelungselemente (5, 12) für diesen trägt, von denen eines in der Sattelplatte (1) schwenkbar angeordnete, etwa V-förmige Kupplungsklaue (5) ausgebildet ist, während das andere ein in der Sattelplatte (1) schwenkbarer, einen mit der Kupplungsklaue (5) in Eingriff bringbaren Verriegelungsvorsprung (11) aufweisender Hebel (12) ist, wobei der beim Einführen des Zugsattelzapfens (4) nachlaufende Schenkel (5) der Kupplungsklaue (5) aussenseitig im Endbereich eine Anlagefläche (10) aufweist, die mit dem korrespondierenden Verriegelungsvorsprung (11) des Hebels (12) in Eingriff bringbar ist, dadurch gekennzeichnet, dass die Anlagefläche (10) ringausschnittförmig geformt ist, und dass der Verriegelungsvorsprung (11) des Hebels (12) aus der Schwenkebene des Hebels herausragt, wobei auf der Sattelplatte (1) ein Gegenanschlag (15) mit einer Führungsfläche (16) für den Verriegelungsvorsprung (11) auf der der Anlagefläche (10) abgewandten Seite vorgesehen und der einarmige Hebel (12) benachbart zu dem sich erweiternden Abschnitt des Kupplungsmauls (2) praktisch querkraftfrei angelenkt ist.

2. Sattelkupplung nach Anspruch 1, dadurch gekennzeichnet, dass der Verriegelungsvorsprung (11) im wesentlichen ringausschnittförmig und sich zu der dem Kupplungsmaul (2) abgewandten Seite hin verbreiternd ausgebildet ist.

3. Sattelkupplung nach Anspruch 1 oder 2, dadurch gekennzeichnet, dass der Hebel (12) fliegend angelenkt ist.

4. Sattelkupplung nach einem der Ansprüche 1 bis 3, dadurch gekennzeichnet, dass der Schenkel (5'') in seiner Höhe zum Schenkel (5') versetzt angeordnet ist, wobei eine innenseitige Ausnehmung (8) des Schenkels (5') einen Radius entsprechend demjenigen des Zugsattelzapfens (4) im Bereich seiner Ringnut über seinem unteren Bund (9) und der Schenkel (5'') eine innenseitige Anlagefläche (14) im wesentlichen mit einem Radius entsprechend demjenigen des Bundes (9) aufweist.

5. Sattelkupplung nach einem der Ansprüche 1 bis 4, dadurch gekennzeichnet, dass der Schenkel (5'') der Kupplungsklaue (5) zumindest im Endbereich in einem bestimmten Abstand zur Sattelplatte (1) angeordnet ist, während der beim Einkuppeln nachlaufende Schenkel (5') der Kupplungsklaue (5) auf der Sattelplatte (1) aufliegt.

6. Sattelkupplung nach einem der Ansprüche 1 bis 5, dadurch gekennzeichnet, dass der Verriegelungsvorsprung (11) auf der der Sattelplatte (1) abgewandten Seite des Hebels (12) vorgesehen ist.

## Claims

1. A saddle coupling with a saddle plate (1), which comprises a coupling mouth (2) ending in a central recess (3) for a kingpin (4) of a semi-trailer and carries locking elements (5, 12) articulated on the saddle plate for the semi-trailer, one of the locking elements being constructed as an approximately V-shaped coupling claw (5) pivotally arranged in the saddle plate (1), whereas the other locking element is a lever (12), which is pivotable in the saddle plate (1) and comprises a locking projection (11) engageable with the coupling claw (5), the limb (5') of the coupling claw (5) which trails during the introduction of the kingpin (4) comprising on the outside of its end region a bearing surface (10), which is engageable with the corresponding locking projection (11) of the lever (12), characterised in that the bearing surface (10) is circular segment-shaped, and the locking projection (11) of the lever (12) projects beyond the pivot plane of the lever, a counter abutment (15) with a guide surface (16) being provided for the locking projection (11) on the saddle plate (1) on the side remote from the bearing surface (10), and the one-arm lever (12) being articulated adjacent the widening section of the coupling mouth (2) and being practically free of transverse forces.

2. A saddle coupling according to claim 1, characterised in that the locking projection (11) is substantially circular segment-shaped and widens towards the side remote from the coupling mouth (2).

3. A saddle coupling according to claim 1 or 2, characterised in that the lever (12) is taper bore mounted.

4. A saddle coupling according to one of claims 1 to 3, characterised in that the limb (5'') is arranged offset in height relative to the limb (5'), an internal recess (8) of the limb (5') having a radius corresponding to that of the kingpin (4) in the region of its annular groove above its lower collar (9), and the limb (5'') comprising an internal bearing surface (14) having a radius essentially corresponding to that of the collar (9).

5. A saddle coupling according to one of claims 1 to 4, characterised in that the limb (5'') of the coupling claw (5) is arranged at a specific distance from the saddle plate (1) at least in the end region, whereas the limb (5') of the coupling claw (5) which trails during coupling rests upon the saddle plate (1).

6. A saddle coupling according to one of claims 1 to 5, characterised in that the locking projection (11) is provided on the side of the lever (12) remote from the saddle plate (1).

## Revendications

1. Accouplement à sellette, comportant une plaque de sellette (1), présentant une bouche de couplage (2), se terminant par un évidement (3) central pour un pivot d'attelage (4) d'une plaque de semi-remorque, et portant des éléments de verrouillage (5, 12), articulés sur la plaque de sellette (1), et dont l'un est réalisé sous forme d'une griffe de couplage (5) à peu près en forme de V, disposée pivotante sur la plaque de sellette (1), tandis que l'autre est un levier (12), susceptible de pivoter sur la plaque de la sellette (1) présentant une saillie de verrouillage (11) susceptible d'être mise en prise avec la griffe de couplage (5), la branche (5), suiveuse lors de l'introduction du pivot d'attelage (4), de la griffe de couplage (7), présentant extérieurement, dans la zone d'extrémité, une surface d'appui (10), qui est susceptible d'être mise en contact avec la partie en saillie de verrouillage (11) correspondante du levier (12), caractérisé en ce que la surface d'appui (10) est réalisée sous la forme d'un tronçon annulaire et en ce que la partie en saillie de verrouillage (11) du levier (12) est placée en saillie par rapport au plan de pivotement du levier, une contre-butée (15) étant prévue sur la plaque de sellette (1) avec une surface de guidage (16) destinée à la partie en saillie de verrouillage (11), du côté opposé à la surface d'appui (10), et le levier à un bras (12) étant articulé, pratiquement exempt d'efforts transversaux, au voisinage du tronçon allant en s'élargissant de la bouche de couplage (2).

2. Accouplement à sellette selon la revendication 1, caractérisé en ce que la partie en saillie de verrouillage (11) est réalisée sensiblement en forme de tronçon annulaire et qui va en s'élargissant du côté opposé à la bouche de couplage (2).

3. Accouplement à sellette selon la revendication 1 ou 2, caractérisé en ce que le levier (12) est articulé flottant.

4. Accouplement à sellette selon l'une des revendications 1 à 3, caractérisé en ce que la branche (5'') est disposée décalée en hauteur par rapport à la branche (5'), en ce qu'un évidement (8) de la branche (5') situé du côté intérieur présente un rayon correspondant à celui du pivot d'attelage (4), dans la zone de sa gorge annulaire, sur sa collerette inférieure (9), et en ce que la branche (5'') comporte une surface d'appui (14) du côté intérieur ayant un rayon correspondant sensiblement à celui de la collerette (9).

5. Accouplement à sellette selon l'une des revendications 1 à 4, caractérisé en ce que la branche (5'') de la griffe de couplage (5) est disposée au moins dans la zone d'extrémité à une distance déterminée par rapport à la plaque de sellette (1), tandis que la branche (5') de la griffe de couplage (5), suiveuse lors de l'accouplement, repose sur la plaque de sellette (1).

6. Accouplement à sellette selon l'une des revendications 1 à 5, caractérisé en ce que la partie en saillie de verrouillage (11) est prévue sur la face du levier opposée à la plaque de sellette (1).
